# EUROPEAN PATENT SPECIFICATION

(11) **EP 4 001 059 B1**
(45) Date of publication and mention of the grant of the patent: **22.10.2025**
(21) Application number: 20840718.9
(22) Date of filing: 25.03.2020
(51) Int. Cl.: B62D 21/15, B62D 25/20, B62D 29/00, B62D 25/00

(54) **COLLISION ENERGY ABSORPTION COMPONENT FOR AUTOMOBILE, AND METHOD FOR MANUFACTURING SAID COLLISION ENERGY ABSORPTION COMPONENT FOR AUTOMOBILE**
KOLLISIONSENERGIEABSORPTIONSBAUTEIL FÜR KRAFTFAHRZEUGE UND VERFAHREN ZUR HERSTELLUNG DIESES KOLLISIONSENERGIEABSORPTIONSBAUTEILS FÜR KRAFTFAHRZEUGE
COMPOSANT D'ABSORPTION D'ÉNERGIE DE COLLISION POUR AUTOMOBILE, ET PROCÉDÉ DE FABRICATION DUDIT COMPOSANT D'ABSORPTION D'ÉNERGIE DE COLLISION POUR AUTOMOBILE

(30) Priority: 18.07.2019 JP 2019132945
(43) Date of publication of application: 25.05.2022
(73) Proprietor: JFE Steel Corporation, Tokyo 100-0011 (JP)
(72) Inventor: HIGAI, Kazuhiko, Tokyo 100-0011 (JP); SHIOZAKI, Tsuyoshi, Tokyo 100-0011 (JP)
(74) Representative: Hoffmann Eitle
(86) International application number: PCT/JP2020/013440
(87) International publication number: WO 2021/009974

(56) References cited:
- JP-A- 2001 048 054
- JP-A- 2001 048 054
- JP-A- 2006 240 134
- JP-A- 2007 062 733
- JP-A- 2009 061 864
- JP-A- 2012 501 363
- JP-A- 2015 077 872
- JP-A- 2018 144 529

## Description

### Field

The present invention relates to an automotive crashworthiness energy absorption part and a manufacturing method of the automotive crashworthiness enFig. 1ergy absorption part, and more particularly, relates to an automotive crashworthiness energy absorption part that absorbs crashworthiness energy by axial crushing, when a crashworthiness load is input from the front or rear of an automotive body, and a manufacturing method of the automotive crashworthiness energy absorption part. Background

As techniques for improving crashworthiness energy absorptive properties of automobiles, there are various technologies such as optimization of the shape, structure, material, and the like of an automotive part. Moreover, in recent years, various techniques have been developed to achieve both improvement of crashworthiness energy absorptive properties of automobile parts and weight reduction of an automotive body, by causing resin (such as foamed resin) to foam and filling the inside of an automotive part having a closed cross section structure with the resin.

For example, JP 2006 240134 A discloses a technique for improving the bending strength and torsional stiffness of an automotive structural member having a structure in which a closed space is formed inside, and improving the stiffness and collision safety of an automotive body, while suppressing an increase in the weight, by aligning the direction of the top portion of a hat-shaped cross section part such as a side sill, a floor member, and a pillar, and overlapping the flange portions, by filling the inside of the automotive structural member with a foam filler.

Moreover, to fill an internal space of the closed cross section structure such as a pillar, which is obtained by causing the hat-shaped cross sections to face each other and combining the flange portions, with a high stiffness foam body, JP 2000 318075 A discloses a technique for improving vibration damping performance that suppresses the transmission of vibration sound, and improving the strength, stiffness, and crashworthiness energy absorptive properties, by fixing the high stiffness foam body using a compressive counterforce generated when the high stiffness foam body is filled and foamed.

JP 2001 048054 A discloses a filler, which is filled only between an outer panel and a reinforcement. Average compressive strength of the filler is set to 4 MPa or more (preferably, 5 MPa or more) and maximum bending strength is set to 10 MPa or more (preferably, 60 MPa or more).
JP 2006 240134 A discloses a structural member, which comprises a closed cross section filled with a foamed filler. As regards the foamed filler, a foamed epoxy filler and a foamed urethane filler are laminated and packed. The volume ratio of the foamed epoxy filler to the foamed urethane filler is 100:100-1,900.

### Summary

### Technical Problem

With the techniques disclosed in JP 2006 240134 A and JP 2000 318075 A, by filling the inside of an automotive part with a foam filler or a foam body, it is said possible to improve the strength and crashworthiness energy absorptive properties against the bending deformation, and the stiffness against the torsional deformation of the automotive part, thereby suppressing the deformation of the automotive part.

However, even if the technique of filling the inside of an automotive part with a foam filler or a foam body is simply applied to an automotive part such as a front side member and a crash box that, when a crashworthiness load is input from the front or rear of an automobile and is axially crushed, absorbs crashworthiness energy by buckling and deforming in a bellows shape, it has been difficult to improve the crashworthiness energy absorptive properties. Moreover, because an additional process of filling the inside of an automotive part tightly with foamed resin is required, the manufacturing cost in producing automotive parts will be disadvantageously increased.

The present invention has been made to solve the above problems, and an object of the present invention is to provide an automotive crashworthiness energy absorption part such as a front side member and a crash box that, when a crashworthiness load is input from the front or rear of an automotive body and is axially crushed, can improve crashworthiness energy absorption effects, reduce additional manufacturing process, and prevent a large increase in the manufacturing cost, and a manufacturing method of the automotive crashworthiness energy absorption part.

### Solution to Problem

The inventors have diligently studied a method for solving the above problems, and found that it is possible to improve crashworthiness energy absorptive effects without requiring an addition process of filling the inside of an automotive part tightly with a filler such as foamed resin, by adopting an electrodeposition paint generally used in the coating process in automobile manufacturing. The present invention has been made on the basis of the findings, and basically includes the following configuration.

An automotive crashworthiness energy absorption part according to the present invention is defined by claim 1.

A manufacturing method of an automotive crashworthiness energy absorption part according to the present invention is defined by claim 2.

### Advantageous Effects of Invention

According to the present invention, it is possible to improve the buckling strength of a tubular member that absorbs crashworthiness energy by axial crushing, when a crashworthiness load is input from the front or rear of an automotive body, in the course of compressive deformation of the tubular member. It is also possible to significantly improve crashworthiness energy absorptive properties, by making the tubular member to buckle and deform in a bellows shape without reducing the deformation resistance, and by preventing the bending portion of the tubular member from being fractured when the tubular member is buckled and deformed. Moreover, it is possible to improve vibration-damping properties by absorbing vibration from the automotive engine and vibration applied to the automotive frame from various directions when driving the automobile. Furthermore, because there is a coating part in the present invention, it is possible to form a coating film having a target thickness in electrodeposition coating generally conducted in the coating process in automobile manufacturing, and produce the coating film using a conventional automobile manufacturing line as it is.

### Brief Description of Drawings

FIG. 1 is a perspective view illustrating an automotive crashworthiness energy absorption part according to a first embodiment of the present invention.
FIG. 2 is a perspective view illustrating a state before a coating film is formed on the automotive crashworthiness energy absorption part according to the first embodiment of the present invention.
FIG. 3 is a graph illustrating a relation between the level of tensile strength of a steel sheet and the ratio between the fracture limit for bending radius and the thickness of the steel sheet.
FIG. 4 is a diagram for explaining a manufacturing method of an automotive crashworthiness energy absorption part according to a second embodiment of the present invention.
FIG. 5 is a diagram illustrating another aspect of the automotive crashworthiness energy absorption part according to the present invention (Part 1).
FIG. 6 is a diagram illustrating another aspect of the automotive crashworthiness energy absorption part according to the present invention (Part 2).
FIG. 7 is a diagram illustrating another aspect of the automotive crashworthiness energy absorption part according to the present invention (Part 3).
FIG. 8 is a diagram illustrating another aspect of the automotive crashworthiness energy absorption part according to the present invention (Part 4).
FIG. 9 is a diagram illustrating another aspect of the automotive crashworthiness energy absorption part according to the present invention (Part 5).
FIG. 10 is a diagram for explaining an axial crush test in an example.
FIG. 11 is a diagram for explaining an impact vibration test in an example.
FIG. 12 is a diagram illustrating a vibration mode, which is a target of the character frequency calculation in the vibration characteristics evaluation by the impact vibration test in the example.
FIG. 13 is a diagram illustrating a structure of a test body used as an invention example in the example.
FIG. 14 is a diagram illustrating a structure of a test body used as a comparative example in the example. Description of Embodiments

### [First Embodiment]

Hereinafter, an automotive crashworthiness energy absorption part according to the present embodiment will be described. In the present specification and the drawings, the same reference numerals denote the components having substantially the same functions and configurations, and the repeated description will be omitted.

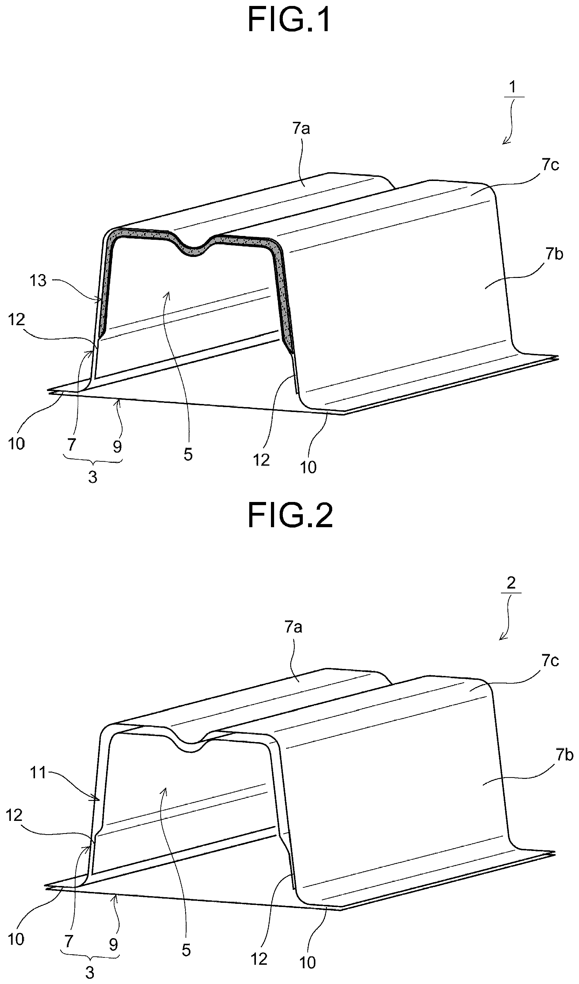

An automotive crashworthiness energy absorption part 1 (FIG. 1) according to the present embodiment is provided on a front part or a rear part of an automotive body, and absorbs crashworthiness energy by axial crushing, when a crashworthiness load is input from the front or rear of the automotive body. While the automotive crashworthiness energy absorption part 1 is fixed to the automotive body, a coating layer of electrodeposition paint is formed on the surface, and a coating film is formed when the coating layer is cured by paint baking treatment. As illustrated in FIG. 1, a coating part 5 is provided on the inner surface side of a tubular member 3 formed using a hat-shaped section part, and a coating film 13 of an electrodeposition paint is formed in a gap between the hat-shaped section part and the coating part 5. FIG. 2 illustrates a state before an electrodeposition coating is performed on the automotive crashworthiness energy absorption part 1 (hereinafter, referred to as a pre-coated part 2). Hereinafter, each member will be described with reference to FIG. 1 and FIG. 2.

### <Tubular Member>

The tubular member 3 is made of a metal sheet such as a steel sheet. The tubular member 3 is formed in a tubular shape, by joining an outer part 7 having a hat-shaped cross section (the hat-shaped section part in the present invention) and including a top portion 7a, a side-wall portion 7b, and a corner portion 7c that couples the top portion 7a and the side-wall portion 7b, with a flat inner part 9 using a joining portion 10. In the course of a crashworthiness load being input to a tip end of the automotive crashworthiness energy absorption part 1 in the axial direction and the tubular member 3 being axially crushed with the load exceeding the buckling strength, the automotive crashworthiness energy absorption part 1 including such a tubular member 3 absorbs the crashworthiness energy, by causing the tubular member 3 to repeatedly buckle and deform in a bellows shape.

### <Coating Part>

The coating part 5 is made of a metal sheet such as a steel sheet. The coating part 5 is disposed on a portion including the corner portion 7c at the inner surface side of the outer part 7 such that a gap 11 of 0.2 mm or more and 3 mm or less is formed, and is joined with a joining portion 12 by spot welding and the like (see FIG. 2). The coating part 5 may be provided across the entire length of the outer part 7 in the axial direction, but may also be provided only on a range where a user wishes to deform the automotive crashworthiness energy absorption part 1 in a bellows shape. For example, if the automotive crashworthiness energy absorption part 1 is mounted on a front part of an automotive body, and if a user wishes to deform the automotive crashworthiness energy absorption part 1 in a bellows shape, in a range from the front end to the middle part in the axial direction, the coating part 5 may be provided on the range of the outer part 7. Then, a portion where the coating part 5 is not provided on the outer part 7, for example, a range from the middle part to the rear end of the automotive crashworthiness energy absorption part 1 in the axial direction may be formed in a bead-shape extending in the axial direction, for example, to increase the deformation strength.

The coating film 13 of an electrodeposition paint is formed in the gap 11, during electrodeposition coating, which is a general coating process in automobile manufacturing (see FIG. 1). Examples of the type of the electrodeposition paint include a polyurethane cationic electrodeposition paint, an epoxy cationic electrodeposition paint, a urethane cationic electrodeposition paint, an acrylic anion electrodeposition paint, a fluororesin electrodeposition paint, and the like. The electrodeposition coating will be specifically described in the following second embodiment.

When a general electrodeposition coating is performed, a coating film of about 0.05 mm is formed on the surface of a steel sheet. However, in the present embodiment, because the coating part 5 is provided on the inner surface side of the outer part 7 in the pre-coated part 2, an electrodeposition paint enters the gap 11, thereby forming a coating layer. When the coating layer is heat treated, the coating film 13 having the thickness of 0.2 mm or more and 3 mm or less as illustrated in FIG. 1 can be formed. The reason why the crashworthiness energy absorption effects of the automotive crashworthiness energy absorption part 1 is improved by forming such a coating film 13 will be described below.

In the course of a crashworthiness load being input to a tip end of the automotive crashworthiness energy absorption part in the axial direction and a tubular member made of a metal sheet such as a steel sheet being axially crushed with the load exceeding the buckling strength, the automotive crashworthiness energy absorption part including the tubular member absorbs the crashworthiness energy, by causing the tubular member to repeatedly buckle and deform in a bellows shape.

However, because a bellows-shaped bending portion has a small bending radius specific to a metal sheet, stress is concentrated on the outer surface of the bending portion and easily causes fracture. When the bending portion is fractured in the course of axial crush, the crashworthiness energy absorption effects are lowered significantly. Thus, to improve the crashworthiness energy absorption effects, it has been necessary to prevent the tubular member that buckles and deforms in a bellows shape from being fractured.

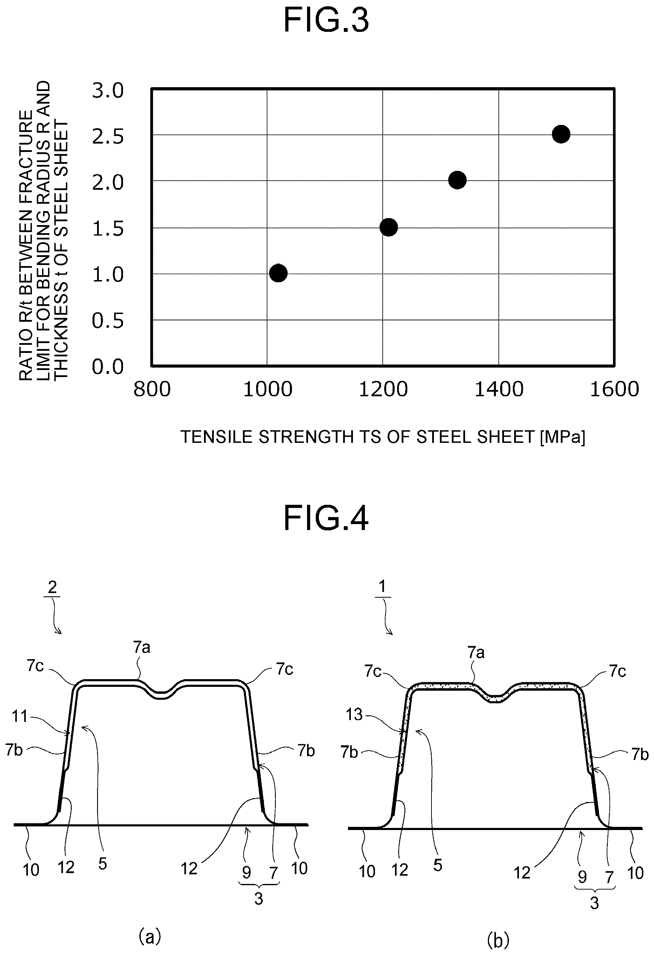

In particular, in recent years, a high-strength steel sheet adopted for automotive parts to improve crashworthiness characteristics and reduce weight of an automotive body, has a small elongation compared to that of a conventional strength steel sheet. The relation between the level of tensile strength of a steel sheet and the fracture limit for bending radius R/thickness t of the steel sheet (see the following Reference 1) illustrated in Table 1 and FIG. 3 indicates that when the steel sheets have the same thickness, fracture tends to occur easily even if the bending radius of the steel sheet is increased with an increase in the tensile strength TS. That is, when an automotive crashworthiness energy absorption part using a high-strength steel sheet is buckled and deformed in a bellows shape, fracture tends to occur easily in a bent tip end in a bellows shape, with an increase in the strength of the steel sheet. This has also prevented the further development of strength in steel sheets to reduce weight of an automotive body. (Reference 1) Hasegawa Kohei, Kaneko Shinjiro, Seto Kazuhiro, "Cold-Rolled and Galvannealed (GA) High Strength Steel Sheets for Automotive Cabin Structure", JFE Technical Report, No. 30 (Aug. 2012), pp. 6-12.

**Table 1**

| Steel sheet strength level | TS [MPa] | R/t [-] |
|---|---|---|
| 780 MPa-class | 810 | Less than 1.0 |
| 980 MPa-class | 1020 | 1.0 |
| 1180 MPa-class | 1210 | 1.5 |
| 1320 MPa-class | 1330 | 2.0 |
| 1470 MPa-class | 1510 | 2.5 |

Alternatively, the present invention prevents the bent tip end of a bending portion, which is deformed in a convex shape when the tubular member 3 is buckled and deformed in a bellows shape during collision, from being fractured, by compressing an object interposed between a metal sheet and a metal sheet so as to increase the bending radius of the convex-shaped bending portion. In this example, the object interposed between a metal sheet and a metal sheet is preferably an object as lightweight as possible, to prevent the weight of the part from increasing. Moreover, the object is preferably an object that can be produced in a conventional automobile manufacturing line as it is, without requiring additional material or process in part manufacturing such as foam resin in the conventional example. Consequently, in the present invention, a paint for electrodeposition coating, which is generally used in automobile manufacturing, is utilized.

Moreover, in the tubular member 3, a region capable of highly absorbing crashworthiness energy is the corner portion 7c that couples the top portion 7a and the side-wall portion 7b. However, when the outer part 7 is press formed, the corner portion 7c is also often subjected to machining and is a region where work hardening occurs. Hence, the elongation is reduced by work hardening. Thus, the bellows-shaped bending portion in the corner portion 7c is a region where fracture tends to occur in particular.

Consequently, in the present invention, the coating part 5 is provided on the inner surface side of the outer part 7 including the corner portion 7c such that the gap 11 of 0.2 mm to 3 mm is formed between the inner surface and the coating part 5, and a coating layer with a predetermined thickness can be formed by causing an electrodeposition paint to enter the gap 11 during electrodeposition coating. The coating layer is cured during the baking process of electrodeposition coating, is fixed in the gap 11, and becomes the coating film 13. When the tubular member 3 is buckled and deformed during collision, the automotive crashworthiness energy absorption part 1 according to the present embodiment can improve crashworthiness energy absorption effects, by preventing the tubular member 3 from being fractured, by interposing the coating film 13 inside the convex-shaped bending portion formed in a bellows shape and increasing the bending radius. The reason why the appropriate thickness of the coating film 13 is between 0.2 mm and 3 mm will be described in the following example.

The coating film 13 in the automotive crashworthiness energy absorption part 1 according to the present embodiment also functions as a vibration-damping material for absorbing vibration. For example, when the automotive crashworthiness energy absorption part 1 is used as a front side member, which is a part for absorbing crashworthiness energy by axial crushing, the coating film 13 absorbs the vibration of an automotive engine mounted on the front side member, thereby improving the vibration-damping properties. The effects of improving the vibration-damping properties will also be described in the following example.

As described above, an object of the coating part 5 is to form the coating film 13 of a predetermined thickness during electrodeposition coating, and the strength is not required. Thus, compared with the outer part 7 and the inner part 9, the strength of the coating part 5 may be lower, and the thickness may be thinner. More specifically, if the strength of the coating part 5 is too strong, the coating part 5 may prevent a smooth deformation in a bellows shape. Hence, for example, the strength of the coating part 5 is preferably 440 MPa-class or less.

### [Second Embodiment]

In the present embodiment, a manufacturing method of the automotive crashworthiness energy absorption part 1 described in the first embodiment will be described. The manufacturing method of the automotive crashworthiness energy absorption part 1 according to the present embodiment includes a part manufacturing process that produces the pre-coated part 2 in which the coating part 5 is provided in the tubular member 3, and a coating film forming step that forms a coating layer on the pre-coated part 2 and that forms the coating film 13 by thermosetting the coating layer by baking finish. Each of the processes will be specifically described below with reference to FIG. 4, which illustrates the cross sections of the automotive crashworthiness energy absorption part 1 illustrated in FIG. 1 and FIG. 2.

### <Part Manufacturing Step>

The part manufacturing step is a step of producing the pre-coated part 2 in which the coating part 5 is provided on the inner surface side of the tubular member 3, which is obtained by joining the outer part 7 and the inner part 9. As illustrated in the example of FIG. 4(a), the coating part 5 is provided on the inside of the outer part 7 in a range including the corner portion 7c such that the coating part 5 is separated from the inner surface of the outer part 7 with the gap 11 of 0.2 mm to 3 mm interposed therebetween. The coating part 5 is joined to the inner surface of the side-wall portion 7b by spot welding and the like. The outer part 7 and the inner part 9 may be joined first, or the outer part 7 and the coating part 5 may be joined first.

### <Coating Film Forming Step>

The coating film forming step is a step of forming the coating film 13 in the gap 11. While the pre-coated part 2 produced in the part manufacturing process described above is fixed to an automotive body, the coating film 13 is formed in the gap 11 by applying electrodeposition coating, which is generally performed in the process of automobile manufacturing. Hereinafter, while briefly describing the electrodeposition coating and other coating processes in automobile manufacturing, the present process will be described.

In general, to increase weatherability, design, anticorrosion property, and the like, an electrodeposition coating, an intermediate coating, a top coat base coating, and a top coat clear coating are sequentially applied on a steel sheet of an automotive body. In particular, the electrodeposition coating applied first on the steel sheet is an important process to improve rust prevention of the automotive body, and has been widely used. During the electrodeposition coating, a treatment for forming a coating layer on a steel sheet by electrodeposition and a treatment for curing the coating layer using a drying furnace (oven) and the like, are performed. Hereinafter, an example of the electrodeposition coating will be described, and the correspondence with the coating film forming process in the present embodiment will be described.

First, in a general electrodeposition coating, as a pretreatment, a surface treatment such as degreasing, washing, and chemical conversion treatment is performed on an automotive body part formed by press-forming a steel sheet and the like. Then, the automotive body part on which the surface treatment is performed is immersed into an electrodeposition tank containing an electrodeposition paint. By electrically conducting an object to be coated (automotive body part) serving as a cathode and the electrodeposition paint serving as an anode, a coating layer of electrodeposition paint is formed on the surface of a steel sheet (cationic electrodeposition coating). The automotive body part the surface of which is formed with the coating layer of electrodeposition paint by being electrically conducted in the electrodeposition tank is then delivered to a high-temperature drying furnace (oven) after the subsequent treatment such as washing, and the coating layer is cured by baking finish.

When the pre-coated part 2 (see FIG. 4(a)) produced in the part manufacturing process in the present embodiment is also immersed into the electrodeposition tank, which is described above, while the pre-coated part 2 is fixed to the automotive body frame, the electrodeposition paint enters the gap 11, and the coating layer is formed by the subsequent electrical conduction. The coating layer of electrodeposition paint is also formed on the surface of the steel sheet in a region other than the gap 11, but because the thickness is about 0.05 mm, the illustration will be omitted.

In the automotive crashworthiness energy absorption part 1 on which the coating layer is formed, the coating layer is then cured after the baking finish as described above, and the coating film 13 of a predetermined thickness is fixed in the gap 11 (FIG. 4(b)). The coating film 13 is preferably formed in a solid state across the entire region in the gap 11. However, the coating film 13 may also be formed in a state that a void is formed in a part of the gap 11. Even in such a case, compared to when the coating film 13 is not formed, the effects of the present invention can be well achieved. Thus, a case when a void is formed in a part of the gap 11 should not be eliminated.

Because the deposition property of the electrodeposition coating on an object to be coated is high, the electrodeposition coating is particularly effective on an inner panel member with many bumps (such as an automotive body frame and an engine room). There are various kinds of electrodeposition paints, and the paints are used for various purposes according to an object to be coated and requested functions (deposition property, energy saving, anticorrosion property, and the like). It is assumed that electrodeposition coating with a flexible coating film, which is mainly used for an inner panel (interior), is used for the automotive crashworthiness energy absorption part 1 in the present invention. Examples of the type of the flexible coating film include a polyurethane cationic electrodeposition paint, an epoxy cationic electrodeposition paint, a urethane cationic electrodeposition paint, an acrylic anion electrodeposition paint, a fluororesin electrodeposition paint, and the like.

The automotive body part on which electrodeposition coating is applied, is then applied with an intermediate coating, a top coat base coating, and a top coat clear coating. These coatings are mainly applied using a method of spraying charged paint onto an object to be coated using spray and the like, which is referred to as electrostatic painting. The intermediate coating has functions of masking the roughness of an electrodeposition coating surface, restraining the transmission of light, and the like. The top coat base coating and the top coat clear coating have functions of design such as coloring, durability, and the like. Examples of the paint used for the intermediate coating, the top coat base coating, and the top coat clear coating include a polyester-melamine paint, an acrylic-melamine paint, an acrylic-polyester-melamine paint, an alkyd-polyester-melamine paint, and the like.

As mentioned in the description of the electrodeposition coating, a function required for the coating differs between the outer panel (exterior) region relating to the appearance of automobile such as a door panel, and an inner panel (interior) region such as an engine room and the crashworthiness energy absorption part, which is an object of the present invention. Thus, one of the coatings described above may be finished according to the region, prior to the final assembly of the automotive body.

As described above, with the manufacturing method of the automotive crashworthiness energy absorption part 1 described in the present embodiment, the coating part 5 is provided in the tubular member 3. Hence, the coating film 13 of an electrodeposition paint is formed in the gap 11 between the tubular member 3 and the coating part 5, during electrodeposition coating generally conducted in the coating process in automobile manufacturing. Thus, it is possible to produce the automotive crashworthiness energy absorption part 1 having high crashworthiness energy absorption effects without significantly increasing the manufacturing cost.

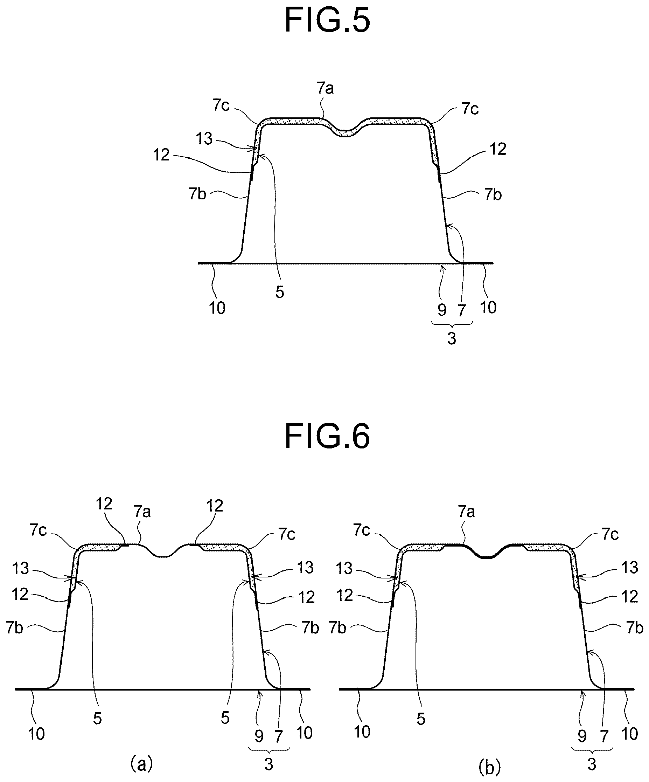

In the first and second embodiments, as illustrated in the cross sections in FIG. 4, the example is described in which the joining portion 12 of the coating part 5 is provided on the side-wall portion 7b of the outer part 7, and the coating film 13 is formed across the inner surface of the top portion 7a, the corner portion 7c, and a part of the side-wall portion 7b. However, the present invention is not limited thereto. For example, as illustrated in FIG. 5, the coating film may also be formed mainly on the inner surface of the top portion 7a and the corner portion 7c, and only slightly formed on the side-wall portion 7b. Moreover, as described above, if the coating film is formed on the inner surface of the corner portion 7c where fracture tends to occur during collision, the crashworthiness energy absorption effects can be expected to be improved further more. Hence, the coating film 13 may also be formed mainly on the inner surface of the corner portion 7c as illustrated in FIG. 6. In this process, the joining portion 12 may be provided on each of the top portion 7a and the side-wall portion 7b using two coating parts 5 (FIG. 6(a)), or the joining portion 12 may be provided on the side-wall portion 7b using one coating part 5 (FIG. 6(b)).

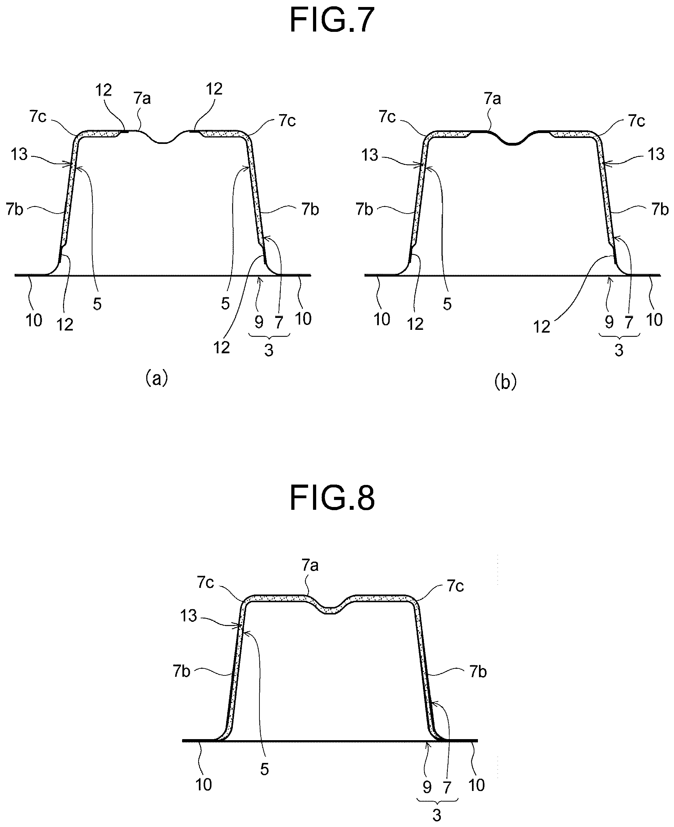

Moreover, as illustrated in FIG. 7, the coating film 13 may also be formed on the inner surface of the side-wall portion 7b and the corner portion 7c. Similar to FIG. 6, the joining portion 12 may be provided on each of the top portion 7a and the side-wall portion 7b using two coating parts 5 (FIG. 7(a)), or the joining portion 12 may be provided on the side-wall portion 7b using one coating part 5 (FIG. 7(b)). Furthermore, as illustrated in FIG. 8, the coating part 5 with a hat-shaped cross section may be fitted to the outer part 7 and the inner part 9, and joined by the joining portion 10.

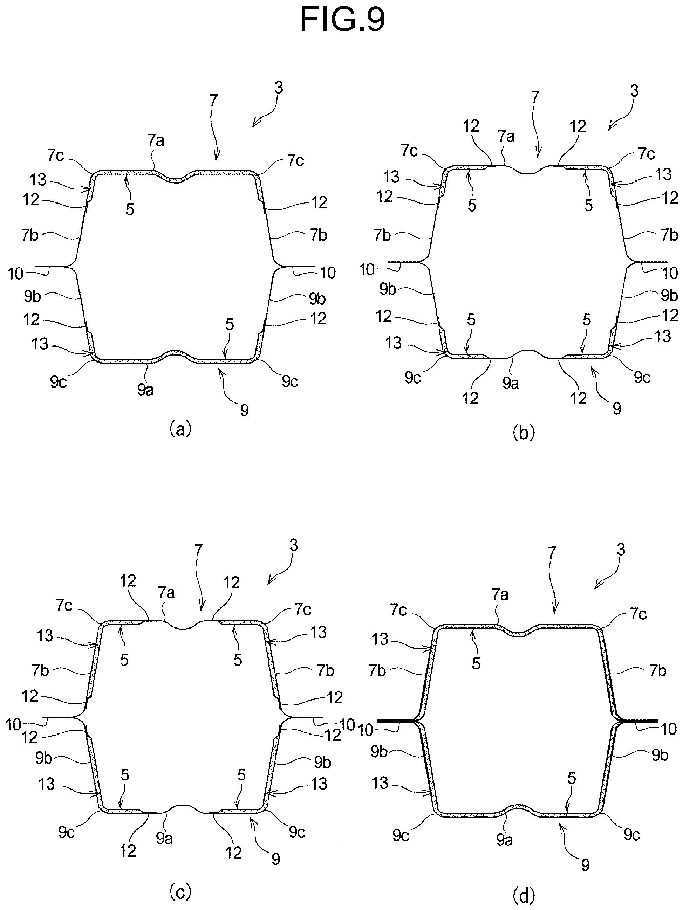

In the present embodiment, the tubular member 3 formed by the outer part 7 having a hat-shaped cross section and the flat inner part 9 is used as an example. However, the present invention is not limited thereto. As illustrated in FIG. 9, the present embodiment is also applicable to the tubular member formed by causing the hat-shaped section parts to face each other and combining the flange portions. FIG. 9(a) is an example of providing the coating part 5 in the form illustrated in FIG. 5 in each of the hat-shaped section parts facing each other. Similarly, FIG. 9(b) is an example of providing the coating part 5 in the form illustrated in FIG. 6(a), FIG. 9(c) is an example of proving the coating part 5 in the form illustrated in FIG. 7(a), and FIG. 9(d) is an example of providing the coating part 5 in the form illustrated in FIG. 8. In FIG. 9, the same reference numerals as those in FIG. 5 to FIG. 8 denote the outer part 7, and the reference numerals corresponding to the outer part 7 denote the inner part 9. Moreover, FIG. 9 illustrates an example in which the outer part 7 and the inner part 9 are the hat-shaped section parts having the same shape. However, the inner part 9 may also be a hat-shaped section part having a different shape from the outer part 7.

### Examples

Experiments were conducted to confirm the effects of the automotive crashworthiness energy absorption part 1 according to the present invention, and the results will be described below.

In the present example, the automotive crashworthiness energy absorption part according to the present invention was used as a test body. The crashworthiness energy absorption characteristics were evaluated by axial crush test, and vibration-damping characteristics were evaluated by measuring the frequency response function and calculating the character frequency in an impact vibration test.

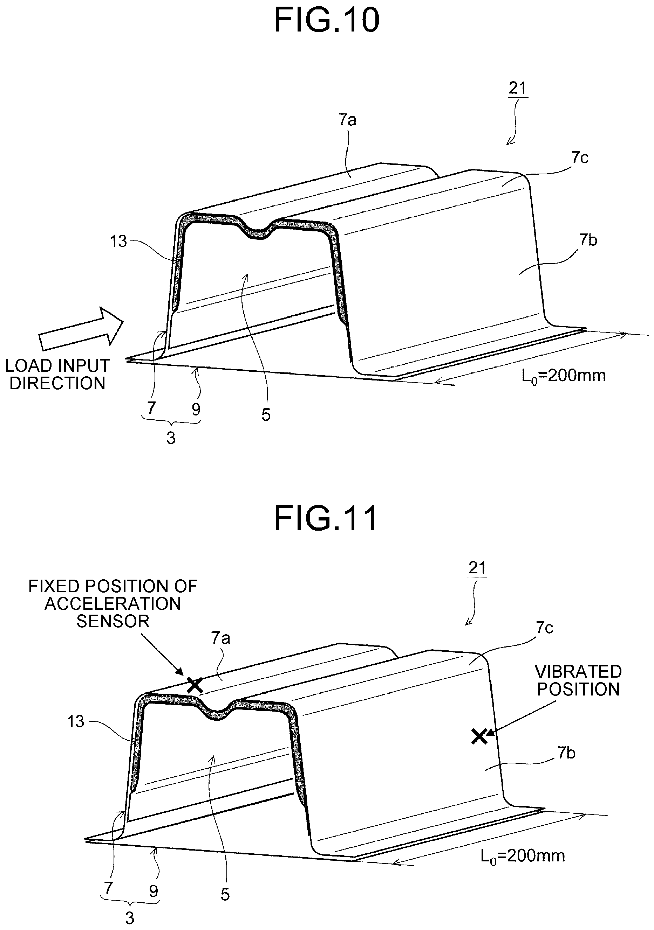

In the axial crush test, as illustrated in FIG. 10, a load-stroke curve was measured. The load-stroke curve indicates the relation between load and stroke (amount of axial crush deformation) when a load is input to a test body 21 including the tubular member 3 in the axial direction at the test speed of 17.8 m/s, and when the test body was axially crushed and the length of the test body (length L0 of the test body 21 in the axial direction) was deformed by 80 mm from 200 mm to 120 mm. Moreover, a high speed camera was used to capture images, and the state of deformation and the presence of a fracture on the tubular member 3 were observed. Furthermore, from the measured load-stroke curve, absorbed energy when the stroke is between 0 and 80 mm was obtained.

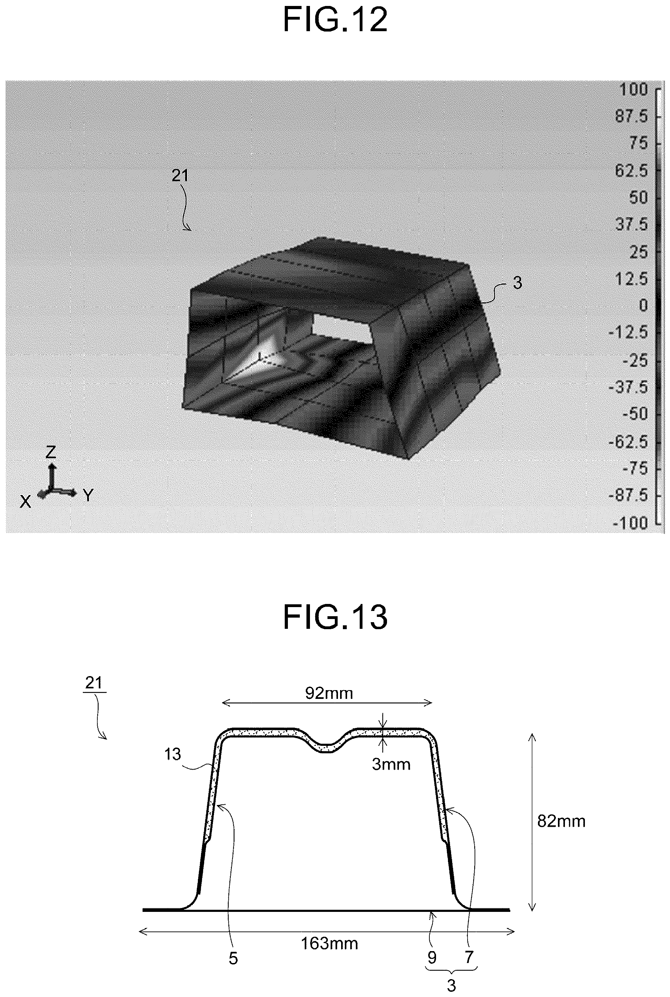

On the other hand, in the impact vibration test, as illustrated in FIG. 11, an acceleration sensor (manufactured by Ono Sokki Co., Ltd.: NP-3211) was fixed around the edge of the top portion 7a of the outer part 7 in the hanging test body 21. Then, the side-wall portion 7b of the outer part 7 in the test body 21 is made to vibrate by striking the side-wall portion 7b with an impact hammer (manufactured by Ono Sokki Co., Ltd.: GK-3100), and by taking the impact force and the acceleration generated in the test body 21 into an FFT analyzer (manufactured by Ono Sokki Co., Ltd.: CF-7200A), the frequency response function was calculated. In this example, the frequency response function was calculated by averaging and curve fitting five strokes. Then, by using the calculated frequency response function, vibration mode analysis was performed, and the character frequency in the same mode was obtained. FIG. 12 illustrates the analyzed vibration mode.

FIG. 13 illustrates the structure and shape of the test body 21 that is the automotive crashworthiness energy absorption part 1 (FIG. 2 and FIG. 4(b)) in which the coating film 13 according to the first and second embodiments described above is formed. The test body 21 includes the tubular member 3 obtained by joining the outer part 7 and the inner part 9 by spot welding, and the coating part 5 is joined to the inner surface of the side-wall portion 7b of the outer part 7. The coating film 13 is formed between the outer part 7 and the coating part 5.

FIG. 13 illustrates an example in which the gap 11 between the top portion 7a and the coating part 5 is set to 3 mm. In the present example, the test bodies 21 with the gap 11 of 2 mm, 1 mm, and 0.2 mm were also prepared, and the test was carried out while changing the thickness of the coating film 13 formed in the gap 11.

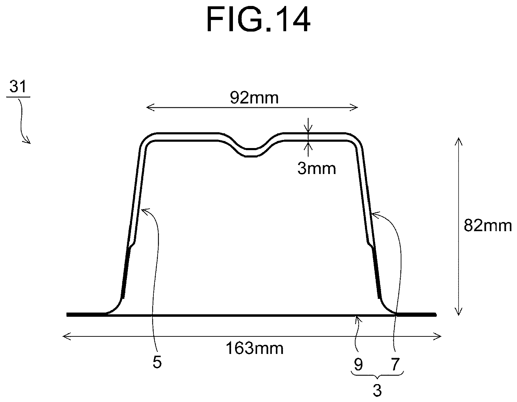

Moreover, as a comparative example, as illustrated in FIG. 14, a test body 31 including the tubular member 3 and the coating part 5 and in which the coating film 13 is not formed was prepared, and the axial crush test and the impact vibration test were carried out as in the invention example. Table 2 illustrates the structures of the test bodies 21 which are invention examples and the test bodies 31 which are comparative examples, conditions of the coating film, and weights of the test bodies. Moreover, Table 2 illustrates the calculation results of absorbed energy when the axial crush test was carried out, and the results of character frequency obtained from the impact vibration test.

**Table 2**

| | Structure | | | | | | | Coating film | | Weight of test body [kg] | Fracture Yes or No | Absorbed energy test speed 17.8 m/s | | Vibration characteristics [Character frequency] |
|---|---|---|---|---|---|---|---|---|---|---|---|---|---|---|
| | (1) Outer Part | | (2) Coating Part | | (3) Inner Part | | Gap between (1) / (2) mm | | | | | | | |
| | Material [MPa] | Thickness [mm] | Material [MPa] | Thickness [mm] | Material [MPa] | Thickness [mm] | | Yes or No | Thickness [mm] | | | [kJ] | [kJ/kg] | [HZ] |
| Invention example 1 | 590 | 1.2 | 270 | 0.5 | 590 | 1.2 | 3 | Yes | 3 | 1.25 | No | 11.1 | 8.9 | 430 |
| Invention example 2 | 590 | 1.2 | 270 | 0.5 | 590 | 1.2 | 2 | Yes | 2 | 1.18 | No | 9.0 | 7.6 | 340 |
| Invention example 3 | 590 | 1.2 | 440 | 0.5 | 590 | 1.2 | 2 | Yes | 2 | 1.18 | No | 9.5 | 8.1 | 340 |
| Invention example 4 | 1180 | 1.2 | 270 | 0.5 | 590 | 1.2 | 1 | Yes | 1 | 1.14 | No | 11.2 | 9.8 | 310 |
| Invention example 5 | 1180 | 1.2 | 270 | 0.5 | 590 | 1.2 | 0.2 | Yes | 0.2 | 1.08 | No | 10.7 | 9.9 | 280 |
| Comparative example 1 | 590 | 1.2 | 270 | 0.5 | 590 | 1.2 | 3 | No | - | 1.06 | No | 6.5 | 6.1 | 155 |
| Comparative example 2 | 590 | 1.4 | 270 | 0.5 | 590 | 1.2 | 2 | No | - | 1.17 | No | 7.0 | 6.0 | 175 |
| Comparative example 3 | 980 | 1.2 | 270 | 0.5 | 590 | 1.2 | 1 | No | - | 1.06 | Yes | 8.1 | 7.6 | 155 |
| Comparative example 4 | 1180 | 1.2 | 270 | 0.5 | 590 | 1.2 | 1 | No | - | 1.07 | Yes | 8.5 | 7.9 | 155 |
| Comparative example 5 | 1180 | 1.2 | - | - | 590 | 1.2 | - | Yes | 0.05 | 0.96 | Yes | 8.7 | 9.1 | 155 |
| Comparative example 6 | 590 | 1.2 | 780 | 0.5 | 590 | 1.2 | 3 | Yes | 3 | 1.06 | Yes | 8.1 | 7.6 | 155 |

In each of the invention example 1 to invention example 5, the test body 21 (FIG. 13) including the coating part 5 and the coating film 13 (FIG. 13) was used, and the strength (material) of the outer part 7 and the coating part 5, and the thickness of the coating film 13 were changed. On the other hand, in the comparative example 1 to comparative example 4, the test body 31 (FIG. 14) including the coating part 5 but not formed with the coating film 13 was used, and the strength (material) and thickness of the outer part 7, and the gap 11 between the outer part 7 and the coating part 5 were changed. In the comparative example 5, the coating film 13 was formed without including the coating part 5. In the comparative example 6, the coating part 5 and the coating film 13 were included as in the test body 21, but the strength of the material of the coating part 5 exceeds that of the material of the outer part 7 and the inner part 9.

For the test body formed with the coating film 13, the weight of the test body illustrated in Table 2 is the total weight of the outer part 7, the inner part 9, the coating part 5, and the coating film 13. For the test body without the coating film 13 (comparative example 1 to comparative example 4), the weight of the test body is the total weight of the outer part 7, the inner part 9, and the coating part 5.

In the comparative example 1, the weight of the test body was 1.06 kg, and the absorbed energy was 6.5 kJ. Moreover, the character frequency was 155 Hz.

In the comparative example 2, the thickness of the outer part 7 and the gap between the outer part 7 and the coating part 5 were changed from those of the comparative example 1. The weight of the test body was 1.17 kg. The absorbed energy was 7.0 kJ, and was increased than that of the comparative example 1. The character frequency was 175 Hz.

In the comparative example 3, a high-strength steel sheet of 980 MPa-class was used for the outer part 7, and the weight of the test body was 1.06 kg. The absorbed energy was 8.1 kJ, and was further increased than that of the comparative example 2. However, fracture was formed on the tubular member 3. The character frequency was 155 Hz.

In the comparative example 4, a high-strength steel sheet of 1180 MPa-class was used for the outer part 7, and the weight of the test body was 1.07 kg. The absorbed energy was 8.5 kJ, and was further increased than that of the comparative example 3. However, fracture was formed on the tubular member 3. The character frequency was 155 Hz.

In the comparative example 5, a high-strength steel sheet of 1180 MPa-class was used for the outer part 7, and the coating film 13 was formed without including the coating part 5. The thickness of the coating film 13 was 0.05 mm. The weight of the test body was 0.96 kg. The absorbed energy was 8.7 kJ, and was increased than that of the comparative example 4. However, fracture was formed on the tubular member 3. The character frequency was 155 Hz.

In the comparative example 6, the strength of the material of the coating part 5 exceeds that of the material of the outer part 7 and the inner part 9 (tubular member 3), and the coating film 13 having a thickness of 3 mm was formed. The weight of the test body was 1.06 kg. The absorbed energy was 8.1 kJ, and was increased than that of the comparative example 2. However, fracture was formed on the tubular member 3. The character frequency was 155 Hz.

In the invention example 1, a steel sheet having a strength of 590 MPa-class was used for the outer part 7 of the test body 21, and the thickness of the coating film 13 was 3 mm. The absorbed energy in the invention example 1 was 11.1 kJ. Compared with the absorbed energy (= 6.5 kJ) in the comparative example 1 made of the same material and without the coating film 13, the absorbed energy was significantly improved, and fracture was not formed on the tubular member 3. In addition, compared with the comparative example 3 (= 8.1 kJ) in which a high-strength steel sheet of 980 MPa-class was used for the outer part 7, and the comparative example 4 (= 8.5 kJ) in which a high-strength steel sheet of 1180 MPa-class was used, the absorbed energy was significantly improved. The weight of the test body (= 1.25 kg) in the invention example 1 was increased than those of the comparative example 1 (= 1.06 kg), the comparative example 3 (= 1.06 kg), and the comparative example 4 (= 1.07 kg). However, the absorbed energy per unit weight obtained by dividing the absorbed energy by the weight of the test body was 8.9 kJ/kg, and was improved than those of the comparative example 1 (= 6.1 kJ/kg), the comparative example 3 (= 7.6 kJ/kg), and the comparative example 4 (= 7.9 kJ/kg). Moreover, the character frequency in the invention example 1 was 430 Hz, and was significantly increased than those of the comparative example 1, the comparative example 3, and the comparative example 4 (= 155 Hz).

In the invention example 2, the same material as that of the invention example 1 was used, and the thickness of the coating film 13 was set to 2 mm. The weight of the test body was 1.18 kg, and is lighter in weight than that of the invention example 1 (= 1.25 kg). The absorbed energy in the invention example 2 was 9.0 kJ, and was improved than the absorbed energy (= 7.0 kJ) in the comparative example 2 having the same shape and in which the thickness of the outer part is thicker. Fracture was not formed on the tubular member 3. Moreover, the absorbed energy per unit weight in the invention example 2 was 7.6 kJ/kg, and was improved than that of the comparative example 2 (= 6.0 kJ/kg). Furthermore, the character frequency in the invention example 2 was 340 Hz, and was significantly increased than that of the comparative example 2 (= 175 Hz).

In the invention example 3, the thickness of the coating film 13 was set to 2 mm as in the invention example 2, and the strength of the steel sheet of the coating part 5 was 440 MPa-class. In the comparative example 6 in which the strength of the steel sheet of the coating part 5 was 780 MPa and exceeds the strength of the steel sheet of the outer part, fracture was formed on the tubular member 3. However, fracture was not formed in the invention example 3. Moreover, the absorbed energy in the invention example 3 was 9.5 kJ, and was improved than that of the comparative example 6 (= 8.1 kJ). Furthermore, the character frequency in the invention example 3 was 340 Hz, and was significantly increased than that of the comparative example 6 (= 155 Hz).

In the invention example 4, a high-strength steel sheet with a strength of 1180 MPa-class was used for the outer part 7, and the thickness of the coating film 13 was set to 1 mm. The absorbed energy in the invention example 4 was 11.2 kJ, and fracture was not formed on the tubular member 3. The absorbed energy in the invention example 4 was significantly improved than that of the comparative example 4 (= 8.5 kJ) in which a steel sheet of the same material was used for the outer part 7 and fracture was formed. Moreover, the weight of the test body in the invention example 4 was 1.14 kg, and is lighter in weight than that of the invention example 1. Furthermore, the absorbed energy (= 9.8 kJ/kg) per unit weight was improved than those of the invention example 1 (= 8.9 kJ/kg) and the comparative example 4 (= 7.9 kJ/kg). Still furthermore, the character frequency in the invention example 4 was 310 Hz, and was significantly increased than that of the comparative example 4 (= 155 Hz).

In the invention example 5, the same material as that of the invention example 4 was used, and the thickness of the coating film 13 was set to 0.2 mm which is about the same thickness as a laminated layer in a general laminated steel sheet. The weight of the test body was 1.08 kg. The absorbed energy in the invention example 5 was 10.7 kJ. The absorbed energy per unit weight was 9.9 kJ/kg, and was improved than that of the comparative example 5 (= 9.1 kJ/kg) in which the coating film of 0.05 mm was formed without including the coating part 5. Moreover, fracture was formed on the tubular member in the comparative example 5, but fracture was not formed in the invention example 5. Furthermore, the character frequency in the invention example 5 was 280 Hz, and was increased than that of the comparative example 5 (= 155 Hz).

Although not illustrated in Table, when the gap between the outer part 7 and the coating part 5 was set to 4 mm or more, that is, when the coating film 13 having a thickness of 4 mm or more was formed, the coating film 13 could not be dried sufficiently by the baking finish of the electrodeposition coating. Thus, in the present invention, the appropriate thickness of the coating film 13 is set between 0.2 mm and 3 mm.

In this manner, when a crashworthiness load is input in the axial direction and an automotive crashworthiness energy absorption part 1 axially crushes, the automotive crashworthiness energy absorption part 1 according to the present invention can effectively improve the crashworthiness energy absorption effects while suppressing an increase in the weight, and can also improve the vibration-damping properties because the character frequency is increased when an impact is applied.

The reason why the vibration-damping properties are improved with an increase in the character frequency is as follows. When the character frequency of the tubular member 3, which is a collision member such as the front side member described above, is within a frequency range of vibration of an engine mounted on the member, sympathetic vibration occurs and the vibration is increased. For example, when the engine is rotated at 4000 rpm, which is a high rotation range in normal driving, the crankshaft is rotated at the same rotation speed. Because the crankshaft in a four cycle engine explodes and vibrates once every two rotations, the frequency of vibration of a four-cylinder engine is 133 Hz, a six-cylinder engine is 200 Hz, and an eight-cylinder engine is 267 Hz. Thus, if the character frequency is about 280 Hz or more as in the present invention, it is possible to effectively prevent the sympathetic vibration described above, and improve the vibration-damping properties.

### Industrial Applicability

According to the present invention, it is possible to provide an automotive crashworthiness energy absorption part such as a front side member and a crash box that, when a crashworthiness load is input from the front or rear of an automotive body and the automotive crashworthiness energy absorption part axially crushes, can improve crashworthiness energy absorption effects, reduce additional manufacturing process, and prevent a large increase in the manufacturing cost, and a manufacturing method of the automotive crashworthiness energy absorption part.

### Reference Signs List

- 1: automotive crashworthiness energy absorption part
- 2: pre-coated part
- 3: tubular member
- 5: coating part
- 7: outer part
- 7a: top portion
- 7b: side-wall portion
- 7c: corner portion
- 9: inner part
- 9a: top portion
- 9b: side-wall portion
- 9c: corner portion
- 10: joining portion (tubular member)
- 11: gap
- 12: joining portion (coating part)
- 13: coating film
- 21: test body (invention example)
- 31: test body (comparative example)

## Claims

1. An automotive crashworthiness energy absorption part for being provided on a front part or a rear part of an automotive body, the automotive crashworthiness energy absorption part (1) being configured to absorb crashworthiness energy by axial crushing in a case where a crashworthiness load is input from front or rear of the automotive body, and comprising:
a tubular member (3) formed using a hat-shaped section part including a top portion (7a) and a side-wall portion (7b);
a coating part (5) configured to form a coating film (13)on a portion including the corner portion (7b) connecting the top portion (7a) to the side-wall portion (7b) in the inner surfaces of the top portion (7a) and the side-wall portion (7b); and
a coating film (13) of an electrodeposition paint formed in the gap (11),
**characterized in that**:
the coating film (13) is arranged with a gap of **0.2** mm or more and 3 mm or less from an inner surface of the top portion (7a), an inner surface of the side-wall portion (7b), and an inner surface of a corner portion (7c),
the coating part (5) being made of a metal sheet having strength lower than the tubular member (3), wherein the strength is such that the coating part (5) does not disturb a smooth deformation in the bellows shape
the tubular member (3) being configured to repeatedly buckle and deform in a bellows shape, in the course of the tubular member (3) being axially crushed with a load exceeding a buckling strength,
the coating film (13) being formed in a solid state across the entire region in the gap (11), wherein the coating film (13) is formed as a flexible coating film by using electrodeposition coating,
wherein the coating film (13) is configured such that, when the tubular member (3) is being buckled and deformed during collision, the coating film (13) is interposed inside a convex-shaped bending portion formed in a bellows shape and a bending radius is increased.

2. A manufacturing method of an automotive crashworthiness energy absorption part provided on a front part or a rear part of an automotive body, the automotive crashworthiness energy absorption part (1) being configured to absorb crashworthiness energy by axial crushing in a case where a crashworthiness load is input from front or rear of the automotive body, the manufacturing method comprising:
a part manufacturing step of producing a pre-coated part including
a tubular member (3) formed using a hat-shaped section part including a top portion (7a) and a side-wall portion (7b), the tubular member being configured to repeatedly buckle and deform in a bellows shape, in the course of the tubular member (3) being axially crushed with the load exceeding a buckling strength, and
a coating part (5) configured to form a coating film (13) arranged with a gap of 0.2 mm or more and 3 mm or less from an inner surface of the top portion (7a), an inner surface of the side-wall portion (7b), and an inner surface of a corner portion(7c), on a portion including the corner portion (7c) connecting the top portion (7a) to the side-wall portion (7b) in an inner surface of the tubular member (3), the coating part (5) being made of a metal sheet having strength lower than the tubular member (3); and
a coating film forming step of forming a coating layer on a surface of the pre-coated part including the gap with the pre-coated part fixed to the automotive body, by an electrodeposition process in an electrodeposition coating with a flexible coating film, and forming a coating film by thermosetting the coating layer by subsequent paint baking treatment.

## Patentansprüche

1. Energieabsorptionsteil für eine Kraftfahrzeug-Kollisionssicherheit zum Bereitstellen an einem vorderen Teil oder einem hinteren Teil einer Kraftfahrzeugkarosserie, wobei das Energieabsorptionsteil für eine Kraftfahrzeug-Kollisionssicherheit (1) so konfiguriert ist, dass es Kollisionssicherheitsenergie durch axiale Kollision absorbiert, wenn eine Kollisionssicherheitslast von einer Vorderseite oder einer Hinterseite der Kraftfahrzeugkarosserie einwirkt, und umfassend:
ein rohrförmiges Element (3), das unter Verwendung eines hutförmigen Abschnittsteils gebildet ist, einschließlich eines oberen Abschnitts (7a) und eines Seitenwandabschnitts (7b);
ein Beschichtungsteil (5), das so konfiguriert ist, dass es einen Beschichtungsfilm (13) auf einem Abschnitt bildet, einschließlich des Eckabschnitts (7b), der den oberen Abschnitt (7a) mit dem Seitenwandabschnitt (7b) in den Innenflächen des oberen Abschnitts (7a) und des Seitenwandabschnitts (7b) verbindet; und
einen im Spalt (11) ausgebildeten Beschichtungsfilm (13) aus einem Elektrotauchlack,
**dadurch gekennzeichnet ist, dass**:
der Beschichtungsfilm (13) mit einem Spalt von 0,2 mm oder mehr und 3 mm oder weniger von einer Innenfläche des oberen Abschnitts (7a), einer Innenfläche des Seitenwandabschnitts (7b) und einer Innenfläche eines Eckabschnitts (7c) angeordnet ist,
wobei das Beschichtungsteil (5) aus einem Metallblech mit geringerer Festigkeit als das rohrförmige Element (3) hergestellt ist, wobei die Festigkeit derart ist, dass das Beschichtungsteil (5) eine gleichmäßige Verformung der Balgform nicht stört
wobei das rohrförmige Element (3) so konfiguriert ist, dass es sich wiederholt knickt und sich in eine Balgform verformt, während das rohrförmige Element (3) axial mit einer Last kollidiert wird, wobei eine Knickfestigkeit überschritten wird,
wobei der Beschichtungsfilm (13) über den gesamten Bereich im Spalt (11) in einem festen Zustand ausgebildet ist, wobei der Beschichtungsfilm (13) durch Elektrotauchlackierung als ein flexibler Beschichtungsfilm ausgebildet ist,
wobei der Beschichtungsfilm (13) so konfiguriert ist, dass, wenn das rohrförmige Element (3) während einer Kollision geknickt und verformt wird, der Beschichtungsfilm (13) in einen konvex geformten Biegeabschnitt eingefügt wird, der in einer Balgform ausgebildet ist, und ein Biegeradius vergrößert wird.

2. Herstellungsverfahren für ein Energieabsorptionsteil für eine Kraftfahrzeug-Kollisionssicherheit, das an einem vorderen Teil oder einem hinteren Teil einer Kraftfahrzeugkarosserie bereitgestellt ist, wobei das Energieabsorptionsteil für eine Kraftfahrzeug-Kollisionssicherheit (1) so konfiguriert ist, dass es Kollisionssicherheitsenergie durch axiale Kollision absorbiert, wenn eine Kollisionssicherheitslast von einer Vorderseite oder Rückseite der Kraftfahrzeugkarosserie einwirkt, wobei das Herstellungsverfahren umfasst:
einen Teilherstellungsschritt zum Herstellen eines vorbeschichteten Teils, einschließlich
eines rohrförmigen Elements (3), das unter Verwendung eines hutförmigen Abschnittsteils gebildet ist, einschließlich eines oberen Abschnitts (7a) und eines Seitenwandabschnitts (7b), wobei das rohrförmige Element so konfiguriert ist, dass es sich wiederholt knickt und sich in eine Balgform verformt, während das rohrförmige Element (3) axial mit der Last kollidiert wird, wobei eine Knickfestigkeit überschritten wird, und
eines Beschichtungsteils (5), das so konfiguriert ist, dass es einen Beschichtungsfilm (13) bildet, der mit einem Spalt von 0,2 mm oder mehr und 3 mm oder weniger von einer Innenfläche des oberen Abschnitts (7a) und einer Innenfläche des Seitenwandabschnitts (7b), und einer Innenfläche eines Eckabschnitts (7c) auf einem Abschnitt angeordnet ist, der den Eckabschnitt (7c) einschließt, der den oberen Abschnitt (7a) mit dem Seitenwandabschnitt (7b) in einer Innenfläche des rohrförmigen Elements (3) verbindet, wobei das Beschichtungsteil (5) aus einem Metallblech mit geringerer Festigkeit als das rohrförmige Element (3) hergestellt ist; und
einen Beschichtungsfilmbildungsschritt zum Bilden einer Beschichtungsschicht auf einer Oberfläche des vorbeschichteten Teils, einschließlich des Spalts mit dem vorbeschichteten Teil, das an der Kraftfahrzeugkarosserie befestigt ist, durch ein Elektrotauchlackierungsverfahren in einer Elektrotauchlackierungsbeschichtung mit einem flexiblen Beschichtungsfilm, und Bilden eines Beschichtungsfilms durch Wärmehärtung der Beschichtungsschicht durch anschließende Lackeinbrennbehandlung.

## Revendications

1. Partie d'absorption d'énergie de résistance à l'écrasement pour automobile destinée à être placée sur une partie avant ou une partie arrière d'une carrosserie automobile, la partie d'absorption d'énergie de résistance à l'écrasement pour automobile (1) étant configurée pour absorber l'énergie de résistance à l'écrasement par écrasement axial dans un cas où une charge de résistance à l'écrasement est appliquée à l'avant ou à l'arrière de la carrosserie automobile, et comprenant :
un élément tubulaire (3) formé en utilisant une partie de section en forme de chapeau incluant une portion supérieure (7a) et une portion de paroi latérale (7b) ;
une partie de revêtement (5) configurée pour former un film de revêtement (13) sur une portion incluant la portion d'angle (7b) reliant la portion supérieure (7a) à la portion de paroi latérale (7b) dans les surfaces intérieures de la portion supérieure (7a) et de la portion de paroi latérale (7b) ; et
un film de revêtement (13) d'une peinture par électrodéposition formé dans l'espace (11),
**caractérisée en ce que** :
le film de revêtement (13) est agencé avec un espace de 0,2 mm ou plus et de 3 mm ou moins par rapport à une surface intérieure de la portion supérieure (7a), une surface intérieure de la portion de paroi latérale (7b) et une surface intérieure d'une portion d'angle (7c),
la partie de revêtement (5) étant constituée d'une feuille de métal présentant une résistance inférieure à celle de l'élément tubulaire (3), dans laquelle la résistance est telle que la partie de revêtement (5) ne perturbe pas une déformation régulière en forme de soufflet
l'élément tubulaire (3) étant configuré pour flamber et se déformer de manière répétée en forme de soufflet lorsque l'élément tubulaire (3) est écrasé axialement avec une charge excédant une résistance au flambage,
le film de revêtement (13) étant formé à l'état solide sur toute la zone dans l'espace (11), dans laquelle le film de revêtement (13) est formé comme un film de revêtement flexible en utilisant un revêtement par électrodéposition,
dans laquelle le film de revêtement (13) est configuré de telle sorte que, lorsque l'élément tubulaire (3) est flambé et déformé au cours d'une collision, le film de revêtement (13) est interposé à l'intérieur d'une portion de flexion convexe en forme de soufflet et un rayon de flexion est augmenté.

2. Procédé de fabrication d'une partie d'absorption d'énergie de résistance à l'écrasement pour automobile placée sur une partie avant ou une partie arrière d'une carrosserie automobile, la partie d'absorption d'énergie de résistance à l'écrasement pour automobile (1) étant configurée pour absorber l'énergie de résistance à l'écrasement par écrasement axial dans un cas où une charge de résistance à l'écrasement est appliquée à l'avant ou à l'arrière de la carrosserie automobile, le procédé de fabrication comprenant :
une étape de fabrication de partie consistant à produire une partie pré-revêtue incluant
un élément tubulaire (3) formé en utilisant une partie de section en forme de chapeau incluant une portion supérieure (7a) et une portion de paroi latérale (7b), l'élément tubulaire étant configuré pour flamber et se déformer de manière répétée en forme de soufflet lorsque l'élément tubulaire (3) est écrasé axialement avec la charge excédant une résistance au flambage, et
une partie de revêtement (5) configurée pour former un film de revêtement (13) agencé avec un espace de 0,2 mm ou plus et de 3 mm ou moins par rapport à une surface intérieure de la portion supérieure (7a), une surface intérieure de la portion de paroi latérale (7b) et une surface intérieure d'une portion d'angle (7c), sur une portion incluant la portion d'angle (7c) reliant la portion supérieure (7a) à la portion de paroi latérale (7b) dans une surface intérieure de l'élément tubulaire (3), la partie de revêtement (5) étant constituée d'une feuille de métal présentant une résistance inférieure à celle de l'élément tubulaire (3) ; et
une étape de formation d'un film de revêtement consistant à former une couche de revêtement sur une surface de la partie pré-revêtue incluant l'espace avec la partie pré-revêtue fixée à la carrosserie automobile, par un processus d'électrodéposition dans un revêtement d'électrodéposition avec un film de revêtement flexible, et à former un film de revêtement par thermodurcissement de la couche de revêtement par un traitement ultérieur de cuisson de peinture.
